# FASCICULE DE BREVET EUROPEEN

(11) **EP 0 367 661 B1**
(45) Date de publication et mention de la délivrance du brevet: **28.07.1993**
(21) Numéro de dépôt: 89402937.0
(22) Date de dépôt: 25.10.1989
(51) Int. Cl.: B29B 15/10, C03B 37/02, B29C 67/14

(54) **Procédé et dispositif de fabrication d'un fil ou d'un ruban formé de fibres de renforcement et d'une matière organique thermoplastique**
Verfahren und Vorrichtung zur Herstellung eines aus Verstärkungsfasern und einem organischen thermoplastischen Material geformten Fadens oder Bandes
Method and apparatus for producing a thread or ribbon made of reinforcing fibres and an organic thermoplastic material

(30) Priorité: 28.10.1988 FR 8814104
(43) Date de publication de la demande: 09.05.1990
(73) Titulaire: VETROTEX SAINT-GOBAIN, F-73000 Chambéry (FR)
(72) Inventeur: Fedorowsky, Robert, F-73100 Aix Les Bains (FR); Roncato, Giordano, F-73100 Aix Les Bains (FR)
(74) Mandataire: Breton, Jean-Claude

(56) Documents cités:
- EP-A- 0 033 244
- EP-A- 0 138 294
- EP-A- 0 182 335
- DE-A- 3 634 904
- FR-A- 2 548 084
- FR-A- 2 597 856
- GB-A- 2 105 247
- US-A- 3 899 562

## Description

La présente invention concerne un procédé et un dispositif de fabrication d'un fil ou d'un ruban composite formé par l'association d'une multiplicité de fibres continues et d'une matière organique thermoplastique. L'association de fibres de renforcement et d'une matière organique, afin de réaliser un produit composite fini, peut-être réalisée de multiples manières. Ce produit composite doit présenter, en particulier, les propriétés requises pour l'application envisagée. Ses propriétés, en particulier ses propriétés mécaniques, sont fonction de la qualité de la liaison qui existe entre la matière organique et les fibres qui la renforcent. L'un des nombreux moyens contribuant à obtenir ce résultat est l'enduction préalable des fibres par une matière organique, identique, ou tout au moins compatible, avec celle qui formera la masse du produit fini. Il existe de nombreux modes d'enduction des fibres de renforcement qui sont mis en oeuvre indépendamment du procédé de fabrication desdites fibres. Ces modes d'enduction, qui nécessitent une opération supplémentaire, ont entre autres inconvénients celui de majorer le coût de production du fil.

Pour éviter les inconvénients des procédés indirects, d'autres procédés préconisent d'enduire les fibres au moment même de leur fabrication. Ces procédés directs s'inspirent des moyens traditionnellement mis en oeuvre pour revêtir la surface des fibres d'un apprêt. Le dispositif d'application de cet apprêt est implanté sur le trajet parcouru par les fibres entre leur zone de formage et la zone où elles sont recueillies sous une forme ou sous une autre.

Le brevet US-A-4 537 610, concernant des fibres continues de verre, décrit une installation qui est exemplaire à cet égard. Une filière, chauffée par effet Joule, est alimentée en verre fondu qui s'écoule par une multiplicité d'orifices, disposés à la base de la filière, sous forme de filets. Ces derniers, après étirage mécanique, donnent naissance à une multiplicité de fibres continues qui sont rassemblées en un seul fil. Un dispositif d'enduction est implanté entre la base de la filière et le point de rassemblement des fibres. Ce dispositif comprend un réservoir, alimenté par un mélange organique thermoplastique à l'état fondu, et un rouleau qui est en partie immergé dans la matière organique et en partie en contact avec les fibres en déplacement. Le rouleau en rotation autour de son axe, entraîne à sa surface une pellicule organique prélevée au passage par les fibres.

Ce type de procédé, bien qu'avantageux, présente encore un certain nombre de contraintes. Ainsi, il peut être intéressant d'obtenir directement un fil composite dans lequel la quantité de matière organique est élevée par rapport au poids dudit fil. Or, d'après les procédés directs connus, le pourcentage pondéral de matière organique retenu par le fil est d'autant plus élevé que la vitesse d'étirage dudit fil est plus faible, et inversement.

Un autre procédé direct est décrit par la demande de brevet DE-A-3.634.904. Ce procédé consiste à étirer mécaniquement à l'aide d'un tambour des fibres de verre continues à partir de verre fondu s'écoulant d'une filière. Les fibres étirées forment une nappe de fibres parallèles sur lesquelles sont projetés des fragments d'un fil organique, extrait d'un enroulement. Ces fragments sont associés mécaniquement aux fibres continues pour former une mèche composite qui est bobinée sur un support en rotation.

La présente invention a pour objet un procédé qui assure, dans une suite continue d'opérations, la fabrication de fibres continues et leur association avec une matière organique thermoplastique, en évitant certaines contraintes présentées par l'art antérieur.

La présente invention a pour objet un procédé d'après lequel la quantité de matière organique, associée aux fibres de renforcement est déterminée indépendamment des conditions de fabrication desdites fibres.

L'invention a notamment pour objet un procédé qui permet d'obtenir directement un fil ou un ruban composite prêt à être transformé en produit fini, dont les pourcentages respectifs de matière organique thermoplastique et de fibres de renforcement correspondent sensiblement à ceux du produit fini.

Ces buts sont atteints par un procédé qui consiste à étirer des fibres de renforcement à partir d'une matière à l'état fondu telle que du verre et, simultanément, à entraîner sous forme de fils ou à extruder et étirer sous forme d'une gaine ou de fibres continues au moins une matière organique thermoplastique, puis à réunir lesdites fibres de renforcement et ladite matière et à les entraîner mécaniquement.

La matière organique thermoplastique peut être associée aux fibres de renforcement sous la forme d'une gaine ou d'une multiplicité de fibres ou de fils continus répartis en une ou plusieurs nappes.

La matière organique peut se présenter sous une forme particulière, fabriquée préalablement à la mise en oeuvre du procédé selon l'invention. Ainsi la matière organique peut se présenter sous la forme d'enroulements de fils continus.

La matière organique peut être également mise en forme au moment même de la mise en oeuvre de l'invention. Ainsi la matière organique peut être extrudée à l'état fondu et étirée mécaniquement sous la forme, par exemple, d'une gaine ou d'une multiplicité de fibres continues. Dans ce cas, les fibres de renforcement sont mises en contact avec la matière organique extrudée alors que la surface de cette dernière est encore à l'état collant ; ceci permet de solidariser immédiatement les fibres de renforcement et la matière organique. La surface de celle-ci est dans cet état pour des températures généralement supérieures à environ 60° C.

Par matière organique thermoplastique, il faut entendre un produit formé aussi bien d'un seul composé organique thermoplastique que d'une association de composés thermoplastiques.

Ainsi, il peut s'agir d'un composé bien défini appartenant, par exemple, aux familles des polyoléfines, polyamides ou des polyesters.

Lorsqu'on utilise des enroulements de fils continus, ces fils peuvent être formés à partir de fibres composites. Ces dernières peuvent être composées, par exemple, de nylon et de polyéthylène, dont la répartition au sein desdites fibres peut être très variable.

La matière organique, quelle que soit la forme sous laquelle elle se présente, et les fibres de renforcement viennent en contact préalablement à leur réunion ou convergent directement vers une zone commune d'assemblage, à partir de laquelle elles sont réunies en un seul fil ou ruban entraîné mécaniquement par un dispositif approprié. Lorsque les fibres de renforcement et la matière organique sont mises en contact, la surface de cette dernière peut être complètement figée ou encore collante.

Selon un des modes de réalisation de l'invention, les fibres de renforcement assemblées préalablement sous forme d'au moins un fil ou demeurant sous forme de nappe (s), viennent en contact avec la matière organique avant leur réunion pour former un seul fil ou un seul ruban.

Selon un autre mode de réalisation de l'invention, les fibres de renforcement, assemblées préalablement sous forme d'au moins un fil ou demeurant sous forme de nappe (s) et la matière organique, convergent vers une zone commune d'assemblage à partir de laquelle elles sont réunies en un seul fil ou ruban entraîné mécaniquement par un dispositif approprié.

Lorsque la matière organique est employée sous forme d'une multiplicité de fibres ou de fils continus, elles (ou ils) sont étirées (ou entraînées) sous forme d'une ou plusieurs nappes.

Lorsque la nappe est unique, elle peut-être avantageusement étirée (ou entraînée), au moins dans son trajet final, sous la forme d'une nappe conique, dont le sommet coïncide avec le point de jonction avec les fibres de renforcement.

Selon une variante, la nappe peut-être étirée (ou entraînée) à partir d'une multiplicité de points répartis sur une surface en forme d'anneau. La nappe se déplace alors dans un volume délimité par deux cônes, dont les bases sont concentriques et le sommet commun. Ces points sont aussi bien les points à partir desquels les fibres sont formées par extrusion, que les points correspondant à un changement de trajectoire des fils, lorsque ceux-ci proviennent d'enroulements disposés à l'extérieur de la zone considérée. Là encore, le sommet des cônes peut coïncider avec le point de réunion avec les fibres de renforcement.

Les fibres ou fils organiques peuvent être étirés ou entraînés en plusieurs nappes. Ces nappes sont issues d'une multiplicité de points répartis, par exemple, sur des arcs de cercle ou des portions d'anneau. Comme précédemment, ces points correspondent soit à un changement de trajectoire des fils ou aux orifices d'extrusion des fibres. Les différentes nappes convergent vers le point de rassemblement avec les fibres de renforcement.

L'invention est mise en oeuvre par un premier type de dispositif qui est composé d'une part, d'une première installation comprenant au moins une filière alimentée en matière fondue, telle que du verre, dont la face inférieure est munie d'une multiplicité d'orifices et, éventuellement, des dispositifs d'enduction, d'assemblage, de guidage et d'étirage mécanique des fibres de renforcement obtenues à partir de ladite filière ; d'autre part, d'une deuxième installation comprenant au moins une filière alimentée en matière organique thermoplastique fondue, sous pression, dont la face inférieure est munie d'au moins un orifice et, éventuellement, des dispositifs d'enduction et de guidage de la matière organique, ces deux installations comprenant, en outre, en commun au moins un dispositif d'assemblage des fibres de renforcement et de la matière organique sous forme d'un fil ou d'un ruban composite, au moins un dispositif d'entraînement mécanique dudit fil ou ruban et, éventuellement, des dispositifs de guidage, d'enduction et de traitement dudit fil ou ruban.

L'invention peut être également mise en oeuvre par un deuxième type de dispositif qui est composé d'une part, d'une première installation similaire à celle du dispositif précédent, d'autre part, d'une deuxième installation comprenant au moins une série d'enroulements de fils de matière organique thermoplastique répartis sur des supports, au moins un dispositif de guidage pour chaque fil extrait de chaque enroulement, au moins un dispositif de guidage pour au moins une partie de l'ensemble desdits fils et, éventuellement, un dispositif d'enduction desdits fils, ces deux installations comprenant, en outre, en commun au moins un dispositif d'assemblage desdits fils et des fibres de renforcement sous la forme d'un fil ou d'un ruban composite, au moins un dispositif d'entraînement mécanique dudit fil ou ruban et, éventuellement, des dispositifs de guidage, d'enduction et de traitement dudit fil ou ruban.

Les fibres de renforcement sont étirées à partir d'une matière thermoplastique fondue comme, par exemple, un verre. Dans cet exemple particulier, la fabrication des fibres de renforcement est schématiquement la suivante : une filière en alliage de métaux précieux est alimentée en verre à l'état solide ou fondu. Cette filière chauffée par effet Joule fond le verre ou le maintient à l'état fondu, elle est munie à sa base d'une multiplicité d'orifices, par lesquels le verre s'écoule sous forme de filets étirés mécaniquement à l'état de fibres.

Dans le cas particulier de l'invention, les filets de verre peuvent être étirés par les mêmes dispositifs que ceux qui entraînent ou étirent la matière organique, ou par des dispositifs différents.

Ainsi le dispositif d'étirage est unique lorsque les fibres de renforcement restent sous forme de nappe (s) de fibres séparées jusqu'à la zone d'assemblage avec la matière organique, zone à partir de laquelle, il y a formation d'un fil ou d'un ruban composite.

Les dispositifs d'étirage utilisés peuvent être différents lorsque les fibres de renforcement sont assemblées sous forme d'au moins un fil, préalablement à leur contact avec la matière organique. Ainsi, les filets de verre peuvent être étirés sous la forme d'au moins une nappe de fibres par un dispositif d'étirage mécanique indépendant. Entre la filière et ce dispositif, les fibres de renforcement sont réunies en au moins un fil par au moins un dispositif d'assemblage, qui sert souvent également de moyen de guidage du fil. Le dispositif d'étirage, qui entraîne donc mécaniquement le fil, peut servir à orienter la trajectoire de celui-ci à sa sortie du dispositif en question. La trajectoire conférée au fil peut l'amener en contact avec la matière organique avant la zone d'assemblage commune. La trajectoire du fil peut aussi converger directement vers ladite zone. Au moins un dispositif d'entraînement ou d'étirage mécanique de la matière organique, qui sera aussi celui du fil ou du ruban composite, est implanté en aval de la zone d'assemblage.

Les dispositifs d'étirage des fibres de verre et de la matière organique étant différents, il est possible de régler séparément les vitesses d'étirage. Lorsque ces vitesses sont identiques, il est possible d'obtenir un fil composite, qui résulte, par exemple, de l'association de fils ou fibres organiques et des fibres de verre.

Lorsque ces vitesses sont différentes, il est possible d'obtenir un ruban composite. Ainsi lorsque la vitesse d'étirage des fibres de verre est supérieure à la vitesse d'entraînement ou d'étirage de la matière organique, lesdites fibres, sous forme de fil, peuvent être réparties sur une certaine largeur lorsqu'elles viennent en contact avec la matière organique. Les vitesses d'étirage et d'entraînement sont le plus généralement comprises entre environ dix mètres et environ trente mètres par seconde.

Selon un mode d'association avantageux, la matière organique, quelle que soit la forme sous laquelle elle se présente vient entourer les fibres de renforcement lors de la naissance du fil ou du ruban composite. Cette présentation permet d'éviter, ou tout au moins d'atténuer, la fragilisation des fibres de verre qui résulte de leur frottement sur une surface solide.

Les dispositifs d'enduction sont susceptibles de déposer sur les fibres de renforcement et/ou sur la matière organique, sous une forme ou sous une autre, des ensimages qui ont pour but de protéger la surface des fibres de verre et/ou de favoriser leur liaison avec le produit à renforcer, des apprêts susceptibles d'unir les différents constituants du fil ou ruban composite, ou une matière organique thermoplastique à l'état fondu.

Il ressort de l'exposé précédent que l'invention peut être mise en oeuvre par des dispositifs présentant de nombreuses variantes.

Ainsi, dans une première installation, les fibres de renforcement assemblées en au moins un fil, et les fibres ou fils de matière organique sont enroulés, immédiatement après leur réunion, sur un support en rotation. L'enroulement de fil composite ainsi obtenu sera formé d'un assemblage purement physique des différents fils ou fibres.

Les installations permettant la mise en oeuvre de l'invention peuvent comprendre d'autres dispositifs qui sont spécifiques du mode de liaison recherché entre les fibres de renforcement et la matière organique et/ou de la présentation du semi-produit désiré.

Ainsi, dans une deuxième installation, les fibres de renforcement, par exemple des fibres de verre, sont enduites d'un apprêt, susceptible de réagir sous l'action d'un rayonnement actinique, avant d'entraîner un contact avec des fils ou des fibres de matière organique. Par rayonnement actinique, il faut entendre toutes les radiations susceptibles de produire des réactions chimiques comme, par exemple, l'ultra-violet, les radiations émises par un faisceau laser ou un faisceau d'électrons. L'installation comporte, après le dispositif produisant l'assemblage desdits fils ou fibres en au moins un fil composite, un dispositif soumettant le fil composite sur une partie de son trajet à l'action d'un rayonnement ultra-violet par exemple. Ce rayonnement a pour effet de polymériser au moins en partie l'apprêt réparti alors sur les fibres de renforcement et les fibres organiques et de provoquer ainsi leur solidarisation par voie chimique. Le fil composite ainsi obtenu est entraîné mécaniquement par un support en rotation sur lequel il forme un enroulement continu.

Dans une troisième installation, variante de la précédente, le fil composite est entraîné mécaniquement par une machine de coupe qui délivre en continu un fil composite coupé.

Dans une quatrième installation, variante par exemple de la deuxième, le fil composite continu est entraîné mécaniquement par un dispositif qui le répartit régulièrement sur une bande transporteuse.

Dans une cinquième installation, un dispositif soumet le fil composite, sur une partie de son trajet, à l'action d'un traitement thermique. L'élévation de température est suffisant pour provoquer le ramollissement des fibres organiques. Un simple refroidissement permet de solidariser les éléments constituant le fil composite.

Comme précédemment, cette dernière installation peut être équipée de dispositifs qui permettent, notamment, d'enrouler le fil composite, de le couper ou de le répartir sur une bande transporteuse.

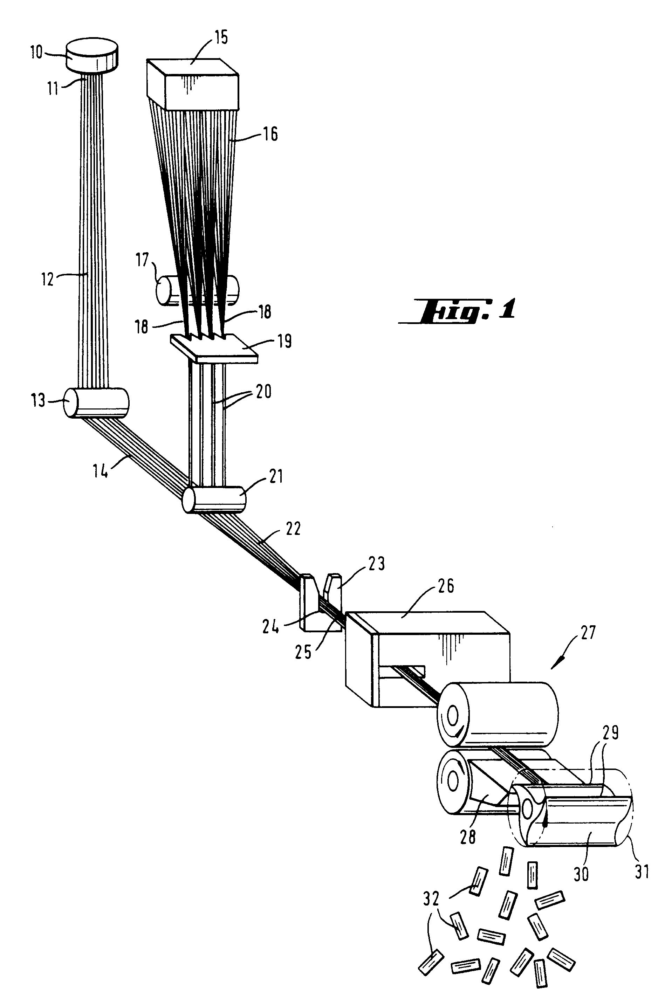

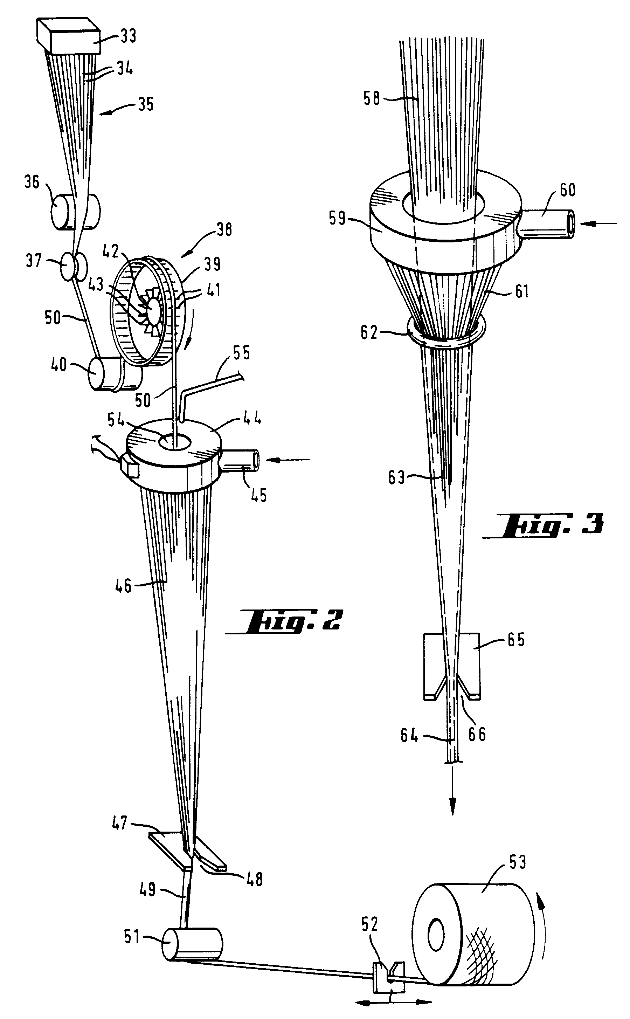

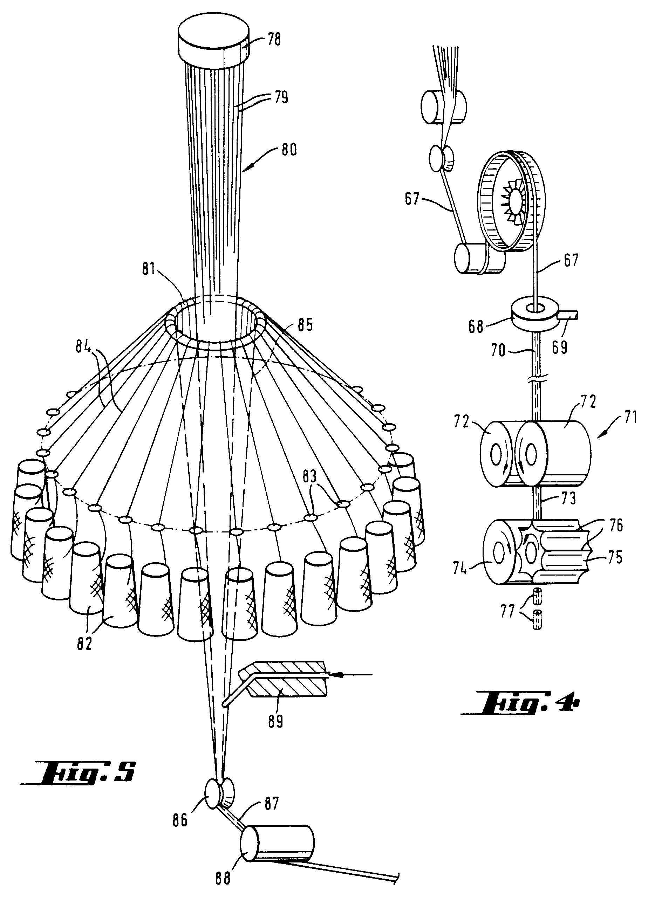

Le procédé selon l'invention et les moyens assurant sa mise en oeuvre seront mieux appréciés au travers de la description détaillée qui suit, illustrée par les figures telles que :
. la figure 1 représente une vue schématique d'une première installation permettant de mettre en oeuvre l'invention,
. la figure 2 représente une vue schématique d' une deuxième installation permettant la mise en oeuvre de l'invention,
. la figure 3 est une vue schématique représentant une partie d'une installation considérée comme une variante de la précédente,
. la figure 4 est une vue schématique représentant une partie d'une installation considérée comme une variante de l'installation illustrée par la figure 3
. la figure 5 est une vue schématique représentant un troisième exemple d'installation permettant de mettre en oeuvre l'invention.

La figure 1 représente l'association de deux installations, l'une produisant des fibres organiques et l'autre des fibres de verre, réduites chacune à leur seul dispositif de fibrage.

La première comprend un ensemble de dispositifs assurant la mise en oeuvre du procédé par voie fondue, bien connu des producteurs de fibres synthétiques.

Le polymère thermoplastique, par exemple un polyamide, sous forme de granulés, est stocké dans une trémie qui alimente, par exemple une extrudeuse verticale. Le polymère est fondu dans cette extrudeuse, puis transporté dans cet état jusqu'à une tête de fibrage qui le distribue à une filière. Cette filière schématisée est référencée 10.

Sous la pression exercée, le polymère s'écoule des multiples orifices de la filière sous la forme de jets fluides 11 qui sont étirés mécaniquement puis refroidis sous la forme d'une multiplicité de fibres continues 12. Ces fibres sont guidées par le cylindre 13 qui a pour effet, notamment, de présenter les fibres 12 sous la forme d'une nappe 14 sensiblement plane.

La deuxième installation comprend un ensemble de dispositifs permettant d'obtenir par étirage mécanique, des fibres continues de verre.

La filière schématisée en 15 ; est normalement reliée à une source d'alimentation en verre. Cette source peut être l'avant-corps d'un four qui achemine directement le verre en fusion jusqu'au sommet de la filière 15 ce peut être aussi une trémie contenant du verre froid, obtenu et stocké, par exemple sous forme de billes, qui alimente par simple gravitation ladite filière.

Dans l'un ou l'autre cas, la filière 15 est généralement en alliage platine-rhodium, et chauffée par effet Joule. Cette filière permet de refondre le verre ou de le maintenir à une température élevée, afin qu'il arrive à une viscosité convenant à son étirage.

Le verre fondu s'écoule sous forme de filet des nombreux orifices disposés à la base de la filière. Ces filets de verre sont immédiatement étirés en de multiples fibres continues 16. Ces fibres sont enduites d'un apprêt par un dispositif symbolisé par le rouleau 17. Ce dispositif peut-être constitué d'un bac, alimenté en permanence par un bain d'apprêt, dans lequel baigne la partie inférieure d'un rouleau en rotation. Ce rouleau se recouvre d'une pellicule d'apprêt qui est prélevé au passage par les fibres 16 venant en contact avec sa surface.

Ces fibres peuvent être réparties en plusieurs nappes 18 grâce à au moins un dispositif d'assemblage 19. Ce dispositif est généralement muni d'encoches au fond desquelles les fibres de chaque nappe sont assemblées pour donner naissance à un fil. Dans l'exemple représenté, le dispositif 19 est muni de quatre encoches séparant les fibres 16 en autant de nappes 18 et donnant naissance à quatre fils 20.

Ces fils sont guidés par un dispositif 21, symbolisé par un rouleau, et qui sert également de guide à la nappe 14 de fibres organiques. Ce rouleau 21 assure le contact entre ces fibres et les fils 20 pour ne former qu'une seule nappe 22.

Cette nappe unique converge vers un dispositif d'assemblage 23 qui provoque la réunion physique des fibres 12 et des fils 20 et forme un fil composite 23. Cette réunion peut être obtenue par le passage de la nappe 22 dans une encoche 24 dont est pourvu le dispositif 23.

Les fibres 16 sont revêtues d'un apprêt comprenant au moins un photo-amorceur, susceptible d'initier une transformation chimique dudit apprêt sous l'action d'un rayonnement actinique. La demande de brevet, publiée en France sous le numéro 2 597 856, décrit des formules d'apprêt susceptibles d'être utilisées dans le cadre de la présente invention, comme celles définies dans les exemples 8 et 12 de ladite demande. L'apprêt déposé initialement sur des fibres de verre séparées, donne une certaine cohésion au fil 20 puis au fil composite 25. Peu après sa naissance, le fil 25 passe dans un dispositif 26 dans lequel il est soumis à l'action d'un rayonnement ultra-violet. Ce rayonnement provoque la transformation de l'apprêt qui est en contact, au moins localement, des fils et fibres qui constituent le fil composite 25 ; cette transformation a pour effet d'augmenter la cohésion du fil composite obtenu.

Le fil 25 et au-delà les fibres organiques 12 et les fibres de verre 16 sont étirés et entraînés mécaniquement par un seul dispositif 27. Ce dispositif est formé d'une paire de cylindres rotatifs tournant en sens opposé et coopérant pour entraîner par friction le fil 25. A la sortie du dispositif 27, le fil 25 passe sur un dispositif contre-lame 28. L'arête de ce dispositif coopère avec les lames 29, portées par un cylindre rotatif 30 enfermé dans un capot de protection 31. Le fil 25 est ainsi coupé en tronçons 32 de longueur régulière. La longueur des tronçons et celle des fibres qu'ils contiennent sont sensiblement égales. Dans la mesure où l'invention permet de régler précisément les pourcentages de matière organique et de fibres de verre, il est possible d'obtenir des tronçons dont la composition est exactement celle du produit composite fini que l'on souhaite fabriquer.

De tels tronçons peuvent ainsi être utilisés directement comme granulés dans un procédé de fabrication tel que le moulage de pièces par extrusion.

La figure 2 représente un autre exemple d'association de deux installations permettant la mise en oeuvre de l'invention.

La première permet de fabriquer des fibres continues de verre. Comme dans l'exemple précédent, elle comprend une filière 33, identique à la filière 10 décrite ci-dessus et fonctionnant de la même manière. Les multiples fibres de verre 34, obtenues par étirage mécanique, sont regroupées en une seule nappe 35 qui passe sur un dispositif ensimeur, symbolisé par le rouleau 36. L'ensimage déposé par ce dispositif a pour but de favoriser l'adhérence des fibres de verre à la matière organique. De nombreuses formulations d'ensimage de ce type sont connues, telles que celles décrites dans le brevet français FR 2 167 771.

Après être revêtues d'ensimage, les fibres 34 sont réunies en un fil unique 50 par un dispositif d'assemblage 37 ; ce dispositif peut être une roulette à gorge. Le fil 50 et au-delà les fibres 34, sont entraînés et étirés mécaniquement par un dispositif 38 animé d'un mouvement de rotation par un moteur non représenté. Ce dispositif, bien connu, est décrit de façon détaillée dans le brevet US-A-3 265 482. Il est constitué d'une roue d'étirage 39 et d'un dispositif de guidage 40 du fil. Le dispositif 40 est implanté de manière à plaquer le fil 50 à la périphérie de la roue 39 sur une longueur suffisante pour provoquer l'entraînement dudit fil par simple friction. La périphérie de la roue 39 comporte une série de fentes transversales 41 régulièrement espacées.

Une seconde roue 42, de plus faible diamètre que la roue 39 et munie à sa périphérie d'ailettes rayonnantes 43, est implantée à l'intérieur de ladite roue. La roue 42 est excentrée par rapport à la roue 39 de manière à ce que les extrémités des ailettes 43 passent à travers les fentes 41. La roue 42 est animée d'un mouvement de rotation synchronisé avec celui de la roue 39, à l'aide d'un dispositif de transmission ou d'une liaison mécanique non représenté. Sous l'action conjuguée des roues 39 et 42, le fil 50 est entraîné mécaniquement puis décollé de la roue 39 grâce aux ailettes 43. A partir de sa zone de décollement, le fil suit un trajet sensiblement tangentiel à la roue 39. Le trajet du fil projeté peut être ainsi déterminé avec précision en choisissant en conséquence la position de la roue 42.

La deuxième installation est similaire à celle décrite dans l'exemple précédent ; elle comprend également des moyens de stockage d'un polymère thermoplastique sous forme de granulés, des moyens de fusion dudit polymère et de son transport sous pression, à l'état fondu, jusqu'à une filière 44. L'arrivée du polymère est symbolisée par le conduit 45.

La filière 44 est une filière annulaire, pourvue d'un passage central 54 au travers duquel le fil 50 est projeté. La base annulaire de cette filière est perforée d'une multiplicité d'orifices répartis régulièrement sur toute sa surface. Par extrusion puis étirage mécanique, il se forme une nappe 46 apparaissant de l'extérieur comme un cône dont la pointe est dirigée vers le bas. Le fil 50 étant projeté dans l'axe dudit cône, sa pointe correspond à la zone d'assemblage de l'ensemble des fibres organiques formant la nappe 46 et dudit fil 50.

Un dispositif d'assemblage 47, muni d'une simple encoche 48, provoque la réunion physique du fil 50 et de la nappe 46 et donne naissance à un seul fil composite 49.

Après guidage par le dispositif 51, le fil 49 est bobiné directement sur un support en rotation non représenté. Le fil 49 est réparti sur ce support par un dispositif guide-fil, symbolisé par la plaque à encoche 52, animé par un mouvement de va-et-vient schématisé par la double flèche. Le produit obtenu est un enroulement à flancs droits 53.

Cette installation permet de procéder à un deuxième traitement superficiel des fibres. Ainsi, il est possible d'implanter un ajutage 55 dont l'extrémité est dirigée vers le passage ménagé au centre de la filière 44. Par cet ajutage, on peut pulvériser un mélange réactif tel que déjà mentionné. Les gouttelettes projetées sont entraînées vers l'intérieur de la nappe 46 du fait des courants d'air induits par le déplacement du fil 50 et des fibres organiques, et se déposent à leur surface.

Comme dans l'application mentionnée précédemment, l'enroulement de fil composite ainsi obtenu peut être utilisé directement pour fabriquer différents produits.

Ainsi, une nappe de plusieurs fils composites continus peut être bobinée sur support, selon le procédé dit par enroulement. Le bobinage des fils étant achevé, ceux-ci sont soumis à un traitement thermique qui provoque la fusion de la matière organique. La solidification de l'ensemble et donc la cohésion de la pièce finale est obtenue par son refroidissement naturel ou contrôlé.

Ce fil composite continu peut être également utilisé pour fabriquer des tissus ; ces tissus peuvent être transformés en plaques rigides après traitement thermique puis refroidissement.

Ce fil composite peut aussi servir à la réalisation de pièces par pultrusion. Une nappe de fils composites est guidée vers une zone où lesdits fils sont réunis, solidarisés puis mis en forme par fusion de la matière organique.

La figure 3 représente une variante de l'installation précédente. Les dispositifs d'assemblage, de guidage et d'étirage des fibres de verre sont supprimés. La nappe de fibres de verre 58 arrive directement (après avoir été éventuellement revêtues d'un apprêt) dans le passage ménagé au centre d'une filière annulaire 59. Cette filière est identique, avec son conduit d'alimentation 60 à la filière 44 de la figure 2.

Cette filière délivre une nappe 61 de fibres organiques qui est resserrée par un anneau de guidage 62. L'emplacement de cet anneau et/ou son diamètre sont définis de manière à rassembler en un seul cône 63 les fibres de verre et les fibres organiques. De ce fait, une partie des fibres de verre va se trouver en contact avec les fibres organiques. Comme dans l'exemple précédent, les différentes fibres sont assemblées en un seul fil composite 64 à l'aide d'un dispositif d'assemblage 65 pourvu d'une encoche 66. Le fil 64 est entraîné mécaniquement par un dispositif non représenté, qui provoque l'étirage commun des fibres de verre et des fibres organiques.

Les orifices disposés à la base des filières 44 et 59 peuvent être répartis selon un cercle et donneront naissance à une nappe limitée à un simple cône, ou bien sur une zone annulaire continue délivrant ainsi une nappe délimitée entre deux cônes de même sommet et de bases concentriques. Les orifices peuvent être répartis aussi, par exemple, entre deux zones bien distinctes qui donnent naissance à deux nappes séparées convergeant vers la zone d'assemblage.

Dans une autre variante de l'installation illustrée par la figure 2, la filière annulaire délivre une gaine continue au lieu de fibres. Cette variante est illustrée par la figure 4.

Selon cette figure, les fibres continues de verre sont étirées puis assemblées et entraînées sous la forme d'un fil 67 ainsi que décrit précédemment. Ce fil passe à travers le passage situé au centre de la filière annulaire 68, alimentée en polymère fondu par l'intermédiaire du conduit 69. La base de cette filière 68 est pourvue d'une buse circulaire par laquelle le polymère est extrudé puis étiré mécaniquement sous la forme d'une gaine continue 70. Cette gaine et le fil 67 viennent en contact au niveau du dispositif d'étirage et d'assemblage 71. Ce dispositif comprend deux cylindres rotatifs 72 tournant en sens opposé ; ces cylindres coopèrent pour étirer et laminer la gaine 70 et le fil 67 pour former un ruban composite 73. Ce ruban est entraîné par une machine de coupe comprenant un cylindre-enclume 74 et un cylindre 75 muni à sa périphérie de lames 76 et découpé en tronçons 77.

La vitesse d'étirage du fil 67 peut être supérieure à celle de la gaine 70 ; dans ce cas, le fil est projeté contre la paroi interne de la gaine avant leur assemblage.

La figure 5 représente une autre façon d'associer deux installations permettant la réalisation de l'invention.

La première installation permettant de fabriquer les fibres de verre est similaire à celle décrite dans les exemples précédents. Elle comprend également une filière 78 fonctionnant de la même manière que les filières 15 et 33 représentées sur les figures 1 et 2. Les multiples fibres de verre 79, obtenues par étirage mécanique, sont regroupés ici en une seule nappe 80. Les dispositifs d'assemblage, de guidage et d'étirage des fibres 79 sont supprimés. La nappe 80 passe directement à travers un cadre circulaire 81.

La deuxième installation est composée de dispositifs qui assurent le stockage, le guidage et la répartition de la matière organique se présentant sous une forme particulière.

La matière organique se présente, dans l'exemple choisi, sous la forme d'une multiplicité d'enroulements 82 qui sont régulièrement disposés sur un ou plusieurs supports non représentés. Ces supports comprennent des dispositifs de guidage 83, à raison d'un dispositif par enroulement. L'extrémité de ces dispositifs peut être constituée d'une simple tige métallique recourbée sur elle-même en forme de boucle, symbolisée ici par une ligne circulaire.

De chaque enroulement 82, un fil 84 est extrait à la défilée extérieure. Les fils 84 sont guidés individuellement par les dispositifs 83 puis collectivement par le cadre 81.

Comme dans les exemples illustrés par les figures 3 et 4, les fibres de verre 79 et les fils organiques 84 sont étirés et entraînés mécaniquement par un seul dispositif non représenté. Sous l'action de ce dispositif, les fils 84, guidés par le cadre 81, forment une nappe conique 85. Les nappes 80 et 85 se rejoignent et sont réunies au niveau du dispositif d'assemblage commun 86. Le dispositif d'assemblage utilisé dans cet exemple est une simple roulette munie d'une gorge. Le fil composite 87 ainsi obtenu, après avoir été guidé par un dispositif 88, est entraîné mécaniquement par le dispositif, non représenté, servant également à l'étirage des fibres 79 et des fils 85.

Un ajutage 89 peut être disposé à proximité immédiate du dispositif d'assemblage 86. Grâce à cet ajutage, on peut pulvériser un apprêt réactif, tel que cité précédemment, à l'intérieur des nappes 80 et 85. Grâce également à ce moyen, il est possible d'injecter à l'intérieur desdites nappes un mince filet de matière organique thermoplastique à l'état fondu.

Le cadre 81 peut bien évidemment avoir d'autres formes, par exemple celle d'un carré. Dans ce cas, les fils 84 pourront être répartis en quatre nappes planes convergentes.

Le dispositif de guidage des fils organiques ne doit pas nécessairement entourer les fibres de renforcement. Ainsi dans l'exemple illustré par la figure 1, la filière 10 pourra être remplacée par une multiplicité d'enroulements de fils, dont les dispositifs de guidage donneront naissance à une ou plusieurs nappes planes convergeant, comme dans la nappe 14, vers la nappe de fils 20.

## Revendications

1. Procédé de fabrication d'un fil ou d'un ruban composite formé d'au moins une matière organique thermoplastique et de fibres de renforcement (16, 34, 79) selon lequel l'association de ces deux constituants est réalisée en les entraînant par un moyen mécanique et en les mettant en contact alors qu'ils sont à l'état solide, les fibres de renforcement (16, 34, 79) étant étirées mécaniquement à partir du verre fondu sous la forme de nappe (58, 80) ou de fils continus (20, 50, 67), la matière organique étant entraînée mécaniquement sous forme de fils continus (84) ou extrudée et étirée mécaniquement sous forme d'une gaine (70) ou de fibres continues (12), et ces deux constituants étant, sous cette forme, réunis et entraînés mécaniquement.

2. Procédé selon la revendication 1, **caractérisé en ce que** les fibres de renforcement (16, 34, 79) sont mises en contact avec la matière organique extrudée et étirée alors que la surface de cette dernière est encore collante.

3. Procédé selon l'une des revendications 1 et 2, **caractérisé en ce que** les fibres de renforcement (16, 34, 79) sont mises en contact avec la matière organique entraînée ou étirée, avant leur réunion sous la forme d'un fil ou d'un ruban composite (25, 49, 64, 87).

4. Procédé selon l'une des revendications 1 et 2, **caractérisé en ce que** les fibres de renforcement (16, 34, 79) et la matière organique entraînée ou étirée convergent directement vers une zone commune d'assemblage, à partir de laquelle elles sont réunies sous la forme d'un fil ou d'un ruban composite (25, 49, 64, 87).

5. Procédé selon l'une des revendications 3 et 4, **caractérisé en ce que** les fibres de renforcement sont assemblées et entraînées mécaniquement sous la forme d'au moins un fil (20, 50, 67), puis sont mises en contact avec la matière organique, préalablement à leur réunion qui donne naissance à un fil ou à un ruban composite (25, 49, 64, 87).

6. Procédé selon l'une des revendications 3 et 4, **caractérisé en ce que** les fibres de renforcement sont assemblées et entraînées mécaniquement sous la forme d'au moins un fil (20, 50, 67), ledit fil étant mis en contact avec la matière organique lors de leur réunion donnant naissance à un fil ou à un ruban composite(25, 49, 64, 87).

7. Procédé selon l'une des revendications 3 et 4, **caractérisé en ce que** les fibres de renforcement sont étirées sous la forme d'au moins un nappe (58) qui est mise en contact avec la matière organique préalablement à leur réunion qui produit un fil ou un ruban composite (64).

8. Procédé selon l'une des revendications 3 et 4, **caractérisé en ce que** les fibres de renforcement sont étirées sous la forme d'au moins une nappe (80) qui est mise en contact avec la matière organique lors de leur réunion qui produit un fil ou un ruban composite (87).

9. Procédé selon la revendication 1, **caractérisé en ce que** les fibres de renforcement (16, 34, 79) et/ou la matière organique sont revêtues d'un apprêt comprenant au moins un photoamorceur, et que le fil ou le ruban composite (25, 49, 64, 87) résultant de leur association est soumis à l'action d'au moins un rayonnement actinique.

10. Procédé selon la revendication 1, **caractérisé en ce que** le fil ou le ruban composite subit un traitement thermique de manière à ramollir suffisamment la matière organique pour la rendre solidaire des fibres de renforcement.

11. Dispositif de fabrication d'un fil ou d'un ruban formé de fibres de verre et d'au moins une matière organique thermoplastique, qui est composé d'une part, d'une première installation comprenant au moins une filière (15, 33) alimentée en verre par simple gravité et chauffée par effet Joule dont la face inférieure est munie d'une multiplicité d'orifices et des dispositifs d'enduction (17, 36) d'assemblage (19, 37) de guidage (21, 40) et d'étirage mécanique des fibres de verre ; d'autre part, d'une deuxième installation comprenant au moins une filière (10, 44, 59) alimentée en matière organique thermoplastique fondue, sous pression, dont la face inférieure est munie d'au moins un orifice et, éventuellement des dispositifs d'enduction et de guidage (13, 62) de la matière organique, ces deux installations comprenant en outre, en commun au moins un dispositif d'assemblage (23, 47, 65, 86) des fibres de renforcement et de la matière organique sous forme d'un fil ou d'un ruban composite, au moins un dispositif d'entraînement mécanique dudit fil ou ruban et, éventuellement, des dispositifs de guidage (51, 88) d'enduction (89) et de traitement (26) dudit fil ou ruban.

12. Dispositif selon la revendication 11, **caractérisé en ce que** la filière (44, 59, 68) de la deuxième installation comporte une ouverture en son centre (54) et que la filière de la première installation et/ou les dispositifs de guidage ou d'étirage (38) des fibres de verre sont implantés de manière à diriger ces fibres à travers ladite ouverture.

13. Dispositif selon la revendication 12, **caractérisé en ce que** la filière de la deuxième installation est une filière annulaire (68) dont la face inférieure est pourvue d'une buse ou d'une série de buses formant une ligne circulaire.

14. Dispositif selon la revendication 12, **caractérisé en ce que** la filière de la deuxième installation est une filière annulaire (44, 59) dont la face inférieure est pourvue d'une multiplicité d'orifices régulièrement répartis sur toute la surface d'une zone circulaire.

15. Dispositif selon la revendication 12, **caractérisé en ce que** la filière de la deuxième installation est une filière annulaire dont la face inférieure est pourvue d'une multiplicité d'orifices régulièrement répartis en au moins deux zones bien distinctes.

16. Dispositif de fabrication d'un fil ou d'un ruban formé de fibres de verre et d'au moins une matière organique thermoplastique, qui est composé d'une part, d'une première installation comprenant au moins une filière (78) alimentée en verre par simple gravité et chauffée par effet Joule, dont la face inférieure est munie d'une multiplicité d'orifices et, éventuellement, des dispositifs d'enduction (89) d'assemblage, de guidage et d'étirage mécanique des fibres de verre ; d'autre part, une deuxième installation comprenant au moins une série d'enroulements (82) de fils de matière organique thermoplastique implantés sur des supports, au moins un dispositif de guidage (83) pour chaque fil extrait de chaque enroulement, au moins un dispositif de guidage (81) pour au moins une partie de l'ensemble desdits fils et, éventuellement un dispositif d'enduction desdits fils, ces deux installations comprennant, en outre, en commun au moins un dispositif d'assemblage (86) desdits fils et fibres de renforcement sous la forme d'un fil ou d'un ruban composite (87) au moins un dispositif d'entraînement mécanique dudit fil ou ruban et, éventuellement des dispositifs de guidage d'enduction et de traitement dudit fil ou ruban.

17. Dispositif selon la revendication 16, **caractérisé en ce que** le dispositif de guidage des fils organiques est un cadre (81) et que la filière de la première installation (78) et/ou les dispositifs de guidage ou d'étirage des fibres de verre sont implantés de manière à diriger ces fibres à travers ledit cadre.

18. Dispositif selon l'une des revendications 11 et 16, **caractérisé en ce qu**'il comprend, entre le dispositif d'assemblage (23) des fibres et de la matière organique et le dispositif d'entraînement (27) du fil ou du ruban composite (25), au moins un dispositif (26) soumettant ledit fil ou ruban à l'action d'au moins un rayonnement actinique.

19. Dispositif selon l'une des revendications 11 et 16, **caractérisé en ce qu**'il comprend au moins un dispositif qui soumet le fil ou ruban composite à un traitement thermique sur une partie de son trajet.

## Claims

1. Process for manufacturing a composite thread or strip formed by at least one thermoplastic organic material and reinforcing fibres (16, 34, 79) according to which these two constituents are combined by being carried along by mechanical means and brought into contact whilst they are in the solid state, the reinforcing fibres (16, 34, 79) being drawn mechanically from molten glass in the form of a sheet (58, 80) or continuous threads (20, 50, 67), the organic material being carried along mechanically in the form of continuous threads (84) or extruded and drawn mechanically in the form of a sheath (70) or continuous fibres (12), and these two constituents being joined and mechanically carried along in this form.

2. Process according to Claim 1, characterised in that the reinforcing fibres (16, 34, 79) are brought into contact with the extruded and drawn organic material whilst its surface is still adhesive.

3. Process according to either of Claims 1 and 2, characterised in that the reinforcing fibres (16, 34, 79) are brought into contact with the carried along or drawn organic material before they are joined to form a composite thread or strip (25, 49, 64, 87).

4. Process according to either of Claims 1 and 2, characterized in that the reinforcing fibres (16, 34, 79) and the carried along or drawn organic material converge directly towards a common assembly area, from which they are combined to form a composite thread or strip (25, 49, 64, 87).

5. Process according to either of Claims 3 and 4, characterized in that the reinforcing fibres are assembled and carried along mechanically in the form of at least one thread (20, 50, 67), then are brought into contact with the organic material, before being combined to produce a composite thread or strip (25, 49, 64, 87).

6. Process according to either of Claims 3 and 4, characterized in that the reinforcing fibres are assembled and carried along mechanically in the form of at least one thread (20, 50, 67), the said thread being brought into contact with the organic material when they are combined to produce a composite thread or strip (25, 49, 64, 87).

7. Process according to either of Claims 3 and 4, characterised in that the reinforcing fibres are drawn in the form of at least one sheet (58), which is brought into contact with the organic material before being combined to produce a composite thread or strip (64).

8. Process according to either of Claims 3 and 4, characterised in that the reinforcing fibres are drawn in the form of at least one sheet (80), which is brought into contact with the organic material when they are combined to produce a composite thread or strip (87).

9. Process according to Claim 1, characterised in that the reinforcing fibres (16, 34, 79) and/or organic material is/are coated with a primer comprising at least one photo-initiator, and in that the composite thread or strip (25, 49, 64, 87) resulting from their association is subjected to the action of at least one actinic radiation.

10. Process according to Claim 1, characterized in that the composite thread or strip undergoes a thermal treatment such that the organic material is softened sufficiently to render it integral with the reinforcing fibres.

11. Device for manufacturing a thread or strip formed of glass fibres and at least one thermoplastic organic material, which consists, on the one hand, of a first installation comprising at least one die plate (15, 33) supplied with glass by simple gravity and heated by the Joule effect, the lower face of which is provided with a plurality of apertures and devices for coating (17, 36), assembling (19, 37), guiding (21, 40) and mechanically drawing the glass fibres; and on the other hand, of a second installation comprising at least one die plate (10, 44, 59) supplied with molten thermoplastic organic material, under pressure, the lower face of which is provided with at least one aperture and, optionally, devices for coating and guiding (13, 62) the organic material, these two installations jointly comprising, in addition, at least one device (23, 47, 65, 86) for assembling the reinforcing fibres and the organic material in the form of a composite thread or strip, at least one device for mechanically carrying along the said thread or strip and, optionally, devices for guiding (51, 88), coating (89) and processing (26) the said thread or strip.

12. Device according to Claim 11, characterized in that the die plate (44, 59, 68) of the second installation comprises an aperture in its centre (54); and in that the die plate of the first installation and/or the devices (38) for guiding or drawing the glass fibres are mounted such that these fibres are directed through the said aperture.

13. Device according to Claim 12, characterized in that the die plate of the second installation is an annular die plate (68), the lower face of which is provided with a nozzle or series of nozzles forming a circular line.

14. Device according to Claim 12, characterized in that the die plate of the second installation is an annular die plate (44, 59), the lower face of which is provided with a plurality of apertures regularly distributed over the entire surface of a circular area.

15. Device according to Claim 12, characterized in that the die plate of the second installation is an annular die plate, the lower face of which is provided with a plurality of apertures regularly distributed in at least two quite separate areas.

16. Device for manufacturing a thread or strip formed of glass fibres and at least one thermoplastic organic material, which consists, on the one hand, of a first installation comprising at least one die plate (78), supplied with glass by simple gravity and heated by the Joule effect, the lower face of which is provided with a plurality of apertures and, optionally, devices for coating (89), assembling, guiding and mechanically drawing the glass fibres; and on the other hand, of a second installation comprising at least a number of rolls (82) of threads of thermoplastic organic material mounted on supports, at least one device (83) for guiding each thread extracted from each roll, at least one device (81) for guiding at least some of the said threads, and, optionally, a device for coating the said threads, these two installations jointly comprising, in addition, at least one device (86) for assembling the said threads and reinforcing fibres to form a composite thread or strip (87), at least one device for mechanically carrying along the said thread or strip and, optionally, devices for guiding, coating and processing the said thread or strip.

17. Device according to Claim 16, characterized in that the device for guiding the organic threads is a frame (81); and in that the die plate (78) in the first installation (78) and/or the devices for guiding or drawing the glass fibres is/are mounted such that these fibres are directed through the said frame.

18. Device according to either of Claims 11 and 16, characterized in that it comprises at least one device (26) subjecting the said thread or strip to the action of at least one actinic radiation, between the device (23) for assembling the fibres and the organic material and the device (27) for carrying along the composite thread or strip (25).

19. Device according to either of Claims 11 and 16, characterized in that it comprises at least one device subjecting the composite thread or strip to a heat treatment over part of its path.

## Patentansprüche

1. Verfahren zur Herstellung eines Fadens oder zusammengesetzten Bandes aus mindestens einem thermoplastischen organischen Material und Verstärkungsfasern (16, 34, 79), gemäß welchem diese beiden Bestandteile dadurch zusammengefügt werden, daß sie durch eine mechanische Vorrichtung mitgeführt und in Kontakt gebracht werden, sobald sie sich in festem Zustand befinden, wobei die Verstärkungsfasern (16, 34, 79) mechanisch aus geschmolzenem Glas in Form eines Bündels (58, 80) oder von Endlosfäden (20, 50, 67) gezogen werden, und wobei das organische Material mechanisch als Endlosfäden (84) mitgeführt wird oder extrudiert und mechanisch in Form einer Hülse (70) oder von fortlaufenden Fasern (12) gezogen wird, und wobei die beiden in dieser Form vorliegenden Bestandteile vereinigt und mechanisch mitgeführt werden.

2. Verfahren nach Anspruch 1, **dadurch gekennzeichnet**, daß die Verstärkungsfasern (16, 34, 79) mit dem extrudierten und gezogenen organischen Material in Berührung gebracht werden, solange die Oberfläche des letzteren noch klebrig ist.

3. Verfahren nach einem der Ansprüche 1 und 2, **dadurch gekennzeichnet**, daS die Verstärkungsfasern (16, 34, 79) mit dem mitgeführten oder gezogenen organischen Material vor ihrer Vereinigung zur Form eines Fadens oder eines zussamengesetzten Bandes (25, 49, 64, 87) in Kontakt gebracht werden.

4. Verfahren nach einem der Ansprüche 1 und 2, **dadurch gekennzeichnet**, daß die Verstärkungsfasern (16, 34, 79) und das mitgeführte oder gezogene organische Material direkt gegen eine gemeinsame Zusammenfügzone konvergieren, von wo ab sie in Form eines Fadens oder eines zusammengesetzten Bandes (25, 49, 64, 87) vereint sind.

5. Verfahren nach einem der Ansprüche 3 und 4, **dadurch gekennzeichnet**, daß die Verstärkungsfasern in Form von mindestens einem Faden (20, 50, 67) zusammengeführt und mechanisch mitgenommen werden, und dann vor ihrer Vereinigung zu einem Faden oder einem zusammengesetzten Band (25, 49, 64, 87) mit dem organischen Material in Kontakt gebracht werden.

6. Verfahren nach einem der Ansprüche 3 und 4, **dadurch gekennzeichnet**, daß die Verstärkungsfasern in Form von mindestens einem Faden (20, 50, 67) zusammengeführt und mechanisch mitgenommen werden, wobei der Faden mit dem organischen Material während ihrer Vereinigung zu einem Faden oder zusammengesetzten Band (25, 49, 64, 87) in Kontakt gebracht wird.

7. Verfahren nach einem der Ansprüche 3 und 4, **dadurch gekennzeichnet**, daß die Verstärkungsfasern in Form von mindestens eines Bündels (58) gezogen werden, das mit dem organischen Material vor ihrer Vereinigung zu einem Faden oder zusammengesetzten Band (64) in Kontakt gebracht wird.

8. Verfahren nach einem der Ansprüche 3 und 4, **dadurch gekennzeichnet**, daß die Verstärkungsfasern in Form von mindestens einem Bündel (80) gezogen werden, das mit dem organischen Material während der Vereinigung zu einem Faden oder zusammengesetzten Band (87) in Kontakt gebracht wird.

9. Verfahren nach Anspruch 1, **dadurch gekennzeichnet**, daß die Verstärkungsfasern (16, 34, 79) und/oder das organische Material mit einem Appreturmittel beschichtet werden, das mindestens ein photoempfindlichen Material enthält, und daß der Faden oder das zusammengesetzte Band (25, 49, 64, 87) aus ihrer Verbindung mindestens einer aktivischen Bestrahlung ausgesetzt wird.

10. Verfahren nach Anspruch 1, **dadurch gekennzeichnet**, daß der Faden oder das zusammengesetzte Band eine thermische Behandlung in der Weise erfährt, daß das organische Material ausreichend erweicht wird, um es mit den Verstärkungsfasern zu verbinden.

11. Vorrichtung zur Herstellung eines Fadens oder eines Bandes aus Glasfasern und mindestens einem thermoplastischen organischen Material, umfassend einerseits eine erste Einrichtung aus mindestens einer Düse (15, 33), die durch Schwerkraft mit Glas versorgt wird, durch Widerstandserhitzung erwärmt und deren untere Fläche mit einer Vielzahl von Öffnungen versehen ist und aus Einrichtungen zur Beschichtung (17, 36), zum Zusammenfügen (19, 37), zum Führen (21, 40) und mechanischen Ziehen der Glasfasern, und umfassend andererseits eine zweite Einrichtung aus zumindest einer Düse (10, 44, 59), die mit geschmolzenem thermoplastischen organischen Material unter Druck versorgt wird und deren Innenfläche mit zumindest einer Öffnung versehen ist, und, eventuell, Einrichtungen zum Beschichten und Führen (13, 62) des organischen Materials, wobei diese beiden Einrichtungen außerdem gemeinsam umfassen: zumindest eine Einrichtung zum zusammenführen (23, 47, 65, 86) der Verstärkungsfasern und des organischen Materials in Form eines Fadens oder eines zusammengesetzten Bandes, zumindest eine Einrichtung zum mechanischen Mitführen des Fadens oder Bandes, und, eventuell, Einrichtungen zum Führen (51, 88), Beschichten (89) und Behandeln (26) des Fadens oder Bandes.

12. Vorrichtung nach Anspruch 11, **dadurch gekennzeichnet**, daß die Düse (44, 59, 68) der zweiten Einrichtung eine Öffnung in ihrem Zentrum (54) aufweist, und daß die Düse der ersten Einrichtung und/oder die Einrichtungen zum Führen oder Ziehen (38) der Glasfasern in der Weise angeordnet sind, daß sie die Fasern über die Öffnung leiten.

13. Vorrichtung nach Anspruch 12, **dadurch gekennzeichnet**, daß die Düse der zweiten Einrichtung eine ringförmige Düse ( 68) ist, deren untere Fläche mit einer oder mehreren Düsenstücken versehen ist, die eine Ringlinie bilden.

14. Vorrichtung nach Anspruch 12, **dadurch gekennzeichnet**, daß die Düse der zweiten Einrichtung eine ringörmige Düse (44, 59) ist, deren untere Fläche mit einer Vielzahl von Öffnungen versehen ist, die regelmäßig über die gesamte Fläche einer ringförmigen Zone verteilt sind.

15. Vorrichtung nach Anspruch 12, **dadurch gekennzeichnet**, daß die Düse der zweiten Einrichtung eine ring-förmige Düse ist, deren untere Fläche mit einer Vielzahl von Öffnungen versehen ist, die regelmäßig auf zumindest zwei voneinander verschiedenen Zonen verteilt sind.

16. Vorrichtung zur Herstellung eines Fadens oder Bandes aus Glasfasern und zumindest einem organischen thermoplastischen Material, umfassend einerseits eine erste Einrichtung aus zumindest einer Düse (78), die durch Schwerkraft mit Glas versorgt wird, durch Widerstandserhitzung erwärmt wird und deren untere Fläche mit einer Vielzahl von Öffnungen versehen ist, und, eventuell, Einrichtungen zum Beschichten (89), Zusammenfügen, Führen und mechanischen Ziehen der Glasfasern und umfassend andererseits eine zweite Einrichtung aus zumindest einer Reihe von Spulen (82) von Fäden aus thermoplastischem organischen Material, die auf Trägern angeordnet sind, aus zumindest einer Einrichtung zum Führen (83) für jeden Faden aus der jeweiligen Spule, und aus zumindest einer Einrichtung zum Führen (81) für zumindest einen Teil der gesamten Fäden und, eventuell, aus einer Einrichtung zum Beschichten der Fäden, wobei diese beiden Einrichtungen außerdem gemeinsam umfassen: zumindest eine Einrichtung zum Zusammenfügen (86) der Fäden und Verstärkungsfasern in Form eines Fadens oder zusammengesetzten Bandes (87), zumindest eine Einrichtung zum mechanischen Mitführen des Fadens oder Bandes und, eventuell, Einrichtungen zum Führen, Beschichten und Behandeln des Fadens oder des Bandes.

17. Vorrichtung nach Anspruch 16, **dadurch gekennzeichnet**, daß die Einrichtung zum Führen der organischen Fädens ein Rahmen (81) ist, und daß die Düse der ersten Einrichtung (78) und/oder die Einrichtung zum Führen oder Ziehen der Glasfasern in der Weise angeordnet sind, daß sie diese Fasern über den Rahmen führen.

18. Vorrichtung nach einem der Ansprüche 11 und 16, **dadurch gekennzeichnet**, daß sie zwischen der Einrichtung zum Zusammenfügen (23) der Fasern und des organischen Materials und der Mitführeinrichtung (27) für den Faden oder das zusammengesetzte Band (25) zumindest eine Einrichtung (26) einschließt, die den Faden oder das Band einer aktivischen Strahlung aussetzt.

19. Vorrichtung nach einem der Ansprüche 11 und 16, dadurch gekennzeichnet, daß sie zumindest eine Einrichtung umfaßt, die den Faden oder das zusammengesetzte Band einer thermischen Behandlung auf einem Teil seines Weges unterwirft.
